# FASCICULE DE BREVET EUROPEEN

(11) **EP 2 198 254 B1**
(45) Date de publication et mention de la délivrance du brevet: **08.03.2017**
(21) Numéro de dépôt: 08869283.5
(22) Date de dépôt: 10.10.2008
(51) Int. Cl.: G01J 3/44, G01N 21/64, G01N 15/14

(54) **PROCÉDÉ ET DISPOSITIF DE CARACTÉRISATION D'ÉLÉMENTS MICROSCOPIQUES**
VERFAHREN UND VORRICHTUNG ZUR KENNZEICHNUNG MIKROSKOPISCHER ELEMENTE
METHOD AND DEVICE FOR CHARACTERIZING MICROSCOPIC ELEMENTS

(30) Priorité: 10.10.2007 FR 0707098
(43) Date de publication de la demande: 23.06.2010
(73) Titulaire: Centre National de la Recherche Scientifique (C.N.R.S.), 75794 Paris Cedex 16 (FR); Université de Limoges, 87000 Limoges (FR)
(72) Inventeur: BOUYGE, David, F-87000 Limoges (FR); LESVIGNE-BUY, Christelle, F-78350 Les Loges en Josas (FR); COUDERC, Vincent, F-87045 Verneuil-sur-Vienne (FR); CRUNTEANU STANESCU, Aurélian, F-87270 Couzeix (FR); LEPROUX, Philippe, F-87250 Saint Pardoux (FR); LEFORT, Laurent, F-87000 Limoges (FR)
(74) Mandataire: Novagraaf Technologies
(86) Numéro de dépôt international: PCT/FR2008/001424
(87) Numéro de publication internationale: WO 2009/087287

(56) Documents cités:
- EP-A- 1 318 389
- US-A- 5 294 799
- US-A1- 2007 188 750
- SIEGEL J ET AL: "Wide-field time-resolved fluorescence anisotropy imaging (TR-FAIM): Imaging the rotational mobility of a fluorophore" REVIEW OF SCIENTIFIC INSTRUMENTS, AIP, MELVILLE, NY, US, vol. 74, no. 1, 1 janvier 2003 (2003-01-01), pages 182-192, XP012040196 ISSN: 0034-6748

## Description

L'invention concerne un procédé et un dispositif de caractérisation qualitatif et quantitatif d'éléments microscopiques par modulation multiparamétrée d'un signal de source.

À ce titre, l'invention concerne le domaine de l'analyse d'éléments microscopiques, c'est-à-dire la caractérisation et le comptage de particules, molécules ou cellules défilant à grande vitesse dans un faisceau lumineux.

Le document EP1318389 divulgue un dispositif pour une telle analyse.

On connaît dans l'état de la technique différentes solutions permettant d'analyser la quantité de particules présentes dans un fluide. Notamment, la cytométrie en flux consiste à analyser les signaux optiques ou physiques émis par une particule coupant le faisceau lumineux d'un laser ou d'une lampe à arc afin d'en déduire des informations de caractérisation et de comptage des particules contenus dans le fluide.

Une analyse par fluorescence est généralement réalisée grâce à l'introduction et à la fixation d'un nombre important de marqueurs fluorescents, également nommés fluorochromes, sur différents composés de la solution. À chaque fluorochrome correspond une longueur d'onde d'excitation spécifique et donc, potentiellement, une source lumineuse monochromatique associée.

Néanmoins, la multiplication de ces marqueurs est limitée par le recouvrement spectral de leur émission. En effet, le recouvrement se produit lorsque le spectre d'émission par fluorescence d'un composé couvre une partie du spectre d'émission d'un autre composé.

Pour éviter cela, plusieurs techniques peuvent être utilisées. La plus couramment employée est la méthode de compensation qui consiste à réduire le signal de fluorescence, ou signal excitateur, de la part proportionnelle de recouvrement spectral entre deux fluorochromes. Néanmoins, la multiplication du nombre de fluorochromes introduit une complexité importante au niveau de l'analyse et induit en conséquence un taux d'erreur important sur le diagnostic.

Une solution pour pallier ces problèmes consiste à introduire sur chaque signal excitateur dédié à un fluorochrome, une modulation de fréquence permettant d'identifier l'émission de fluorescence par une analyse fréquentielle en plus de l'analyse chromatique. Pour cela, un modulateur acousto-optique ou électro-optique peut être utilisé. Ce principe d'analyse cytométrique multiparamétrée a fait l'objet de plusieurs demandes de brevets.

On connaît notamment le brevet américain n° US 03/0205682 qui décrit la modulation de chaque longueur d'onde à une fréquence donnée. Par ailleurs, les demandes de brevet internationale n° WO 06/111641 et américaine n° US 04/0251436 divulguent l'utilisation de modulateurs acousto-optiques permettant de sélectionner les longueurs d'onde dans une lumière polychromatique et de les moduler chacune spécifiquement à une fréquence donnée.

La modulation fréquentielle, par le biais de modulateurs acousto-optiques ou électro-optiques induit à la fois une difficulté au niveau des modulateurs et des sources lumineuses à utiliser. En effet, les modulateurs présentent des caractéristiques différentes en fonction de la longueur d'onde d'utilisation et doivent donc être corrigés des aberrations chromatiques. De plus, la source lumineuse doit présenter une fréquence d'émission suffisamment élevée pour obtenir plusieurs signaux d'analyse lors du découpage du signal de source. Si la fréquence d'émission est trop faible, le découpage du signal de source est limité et ne permet donc pas de caractériser suffisamment de marqueurs.

D'autre part la modulation spectro-fréquentielle ne permet pas toujours d'obtenir des résultats fiables et satisfaisants, notamment lorsque le nombre de fluorochromes est trop important.

Enfin, l'utilisation de modulateurs acousto-optiques et de sources laser présentant des fréquences d'émission élevées représente des coûts importants.

Le but de la présente invention est d'apporter des solutions aux problèmes techniques susmentionnés en présentant un dispositif et un procédé de caractérisation d'éléments microscopiques qui soit à la fois fiable, peu coûteux et qui permette d'obtenir de bons résultats lorsque le nombre d'éléments à caractériser est important.

À ce titre, l'invention prévoit de découper le signal de source par le biais de microsystèmes d'éléments opto-électromécaniques, également nommés *MOEMS,* ce qui génère de nouvelles possibilités de modulation, notamment temporelle, des signaux excitateurs.

Plus précisément, l'invention a pour objet un procédé de caractérisation d'éléments microscopiques selon la revendication 1.

De préférence, l'étape de découpe des signaux excitateurs est précédée d'une phase de sélection de la largeur spectrale de ces signaux excitateurs.

Avantageusement, l'étape de codage des signaux excitateurs comprend :
- une phase de modulation temporelle des signaux excitateurs, notamment par retardement d'au moins un signal excitateur et/ou par modulation de phase d'au moins un signal excitateur ;
- une phase de modulation fréquentielle des signaux excitateurs, notamment par commutation des *MOEMS* ; et/ou
- une phase de modulation de la polarisation des signaux excitateurs.

L'invention se rapporte également à un dispositif de caractérisation d'éléments microscopiques selon la revendication 8.

De préférence, les éléments opto-électromécaniques sont :
- de type pont ou cantilever ;
- de forme sensiblement triangulaire ; et/ou
- des miroirs achromatiques déformables.

Avantageusement le dispositif présente des filtres de couleur devant les éléments opto-électromécaniques.

De préférence, le dispositif présente des moyens de codage des signaux excitateurs par modulation temporelle.

Selon un mode de réalisation avantageux, les moyens de codage par modulation temporelle sont des lignes à retard.

De préférence, le dispositif présente des moyens de modulation de phase des signaux excitateurs.

Avantageusement, les moyens de modulation de phase sont constitués d'un modulateur piézoélectrique permettant d'étirer de façon périodique les lignes à retard.

Avantageusement, le dispositif présente des moyens de codage des signaux excitateurs par modulation fréquentielle.

Selon un mode de réalisation, le microsystème comporte des actionneurs électromécaniques de commutation des éléments opto-électromécaniques pour réaliser la modulation fréquentielle des signaux excitateurs.

De préférence, le dispositif présente des moyens de codage des signaux excitateurs par modulation de la polarisation

Selon un exemple de réalisation, la source lumineuse est une source blanche impulsionnelle.

La technologie *MOEMS,* déjà implantée dans d'autres domaines d'application, est une technologie mature présentant les avantages d'être précise, peu coûteuse et compacte.

Les *MOEMS* permettent de découper précisément le signal de source en une multitude de signaux excitateurs présentant des longueurs d'onde λᵢ prédéterminées.

Ils permettent également d'adresser spatialement, de manière synchrone ou non, ces signaux excitateurs sur plusieurs fenêtres d'analyses, ce qui permet d'envisager des analyses en parallèle.

Enfin les *MOEMS* peuvent être utilisés pour générer la modulation temporelle et/ou fréquentielle, par commutation d'impulsions.

L'utilisation de *MOEMS* de type cantilever à profil triangulaire permet de modifier la largeur spectrale des signaux d'excitation, sans modifier leur longueur d'onde centrale **λᵢ**. Il en résulte une modification et un ajustement de la densité spectrale de puissance (flux lumineux par unité de spectre) des signaux excitateurs.

Les microsystèmes d'éléments opto-électromécaniques de type cantilever sont avantageux car les tensions de commande à appliquer sont faibles.

Les microsystèmes d'éléments électroniques de type pont possèdent une vitesse d'activation importante et une fréquence allant jusqu'à 200 KHz, ce qui permet d'augmenter la fréquence d'échantillonnage du dispositif.

L'utilisation de filtres devant les éléments opto-électroniques introduit un degré de liberté supplémentaire au niveau du flux lumineux désiré.

Le fait de moduler temporellement les signaux excitateurs, en plus de la modulation spectrale et des éventuelles autres modulations préexistantes, permet d'une part d'obtenir un diagnostic plus fiable par recoupement des résultats et d'autre part d'analyser un plus grand nombre d'éléments microscopiques. En effet, cette modulation temporelle permet de s'affranchir des problèmes liés au recouvrement spectral des fluorochromes.

Les modulations supplémentaires, notamment en fréquence et en polarisation, permettent de caractériser un plus grand nombre d'éléments microscopiques et de fiabiliser l'analyse par recoupement des résultats.

Par ailleurs, L'utilisation de fibres optiques de longueur ajustable mécaniquement permet de rajouter un codage temporel et une modulation de phase sur les signaux excitateurs.

L'utilisation d'une source blanche impulsionnelle avec une modulation temporelle des signaux excitateurs permet de limiter les coûts du dispositif selon l'invention sans diminuer ses performances.

D'autres caractéristiques et avantages de l'invention ressortiront à la lecture qui suit d'un exemple de réalisation détaillé, en référence aux figures qui représentent respectivement :
- la figure 1, une vue schématique d'un premier exemple de réalisation d'un dispositif de caractérisation d'éléments microscopiques selon l'invention ;
- la figure 2, une vue schématique d'un second exemple de réalisation d'un dispositif de caractérisation d'éléments microscopiques selon l'invention ;
- la figure 3, une vue schématique d'un mode de réalisation de microsystèmes d'éléments opto-électromécaniques appartenant à un dispositif de caractérisation d'éléments microscopiques selon l'invention.

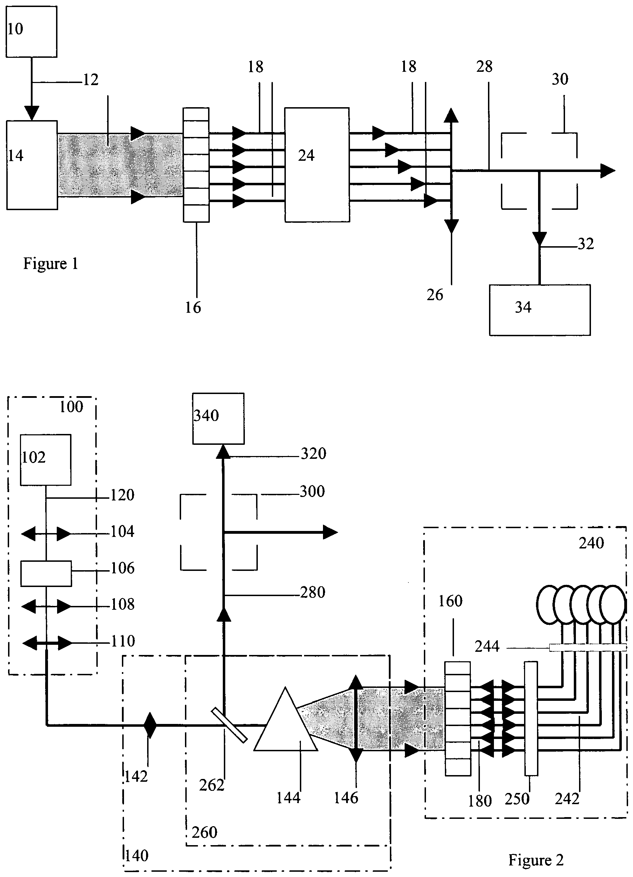

Un exemple de réalisation d'un procédé de caractérisation d'éléments microscopiques selon l'invention va maintenant être décrit, en référence à la figure 1.

Dans cet exemple de réalisation, la caractérisation des éléments microscopiques se fait par cytométrie de flux, dites cytométrie de fluorescence. Les éléments microscopiques sont donc marqués par des fluorochromes capables d'émettre de la lumière de fluorescence après excitation.

La première étape du procédé consiste à propager et disperser spatialement, par l'intermédiaire de moyens d'émission 10 et de dispersion 14, un signal de source 12 lumineux, cohérent ou partiellement cohérent.

Le spectre du signal de source 12 dispersé est ensuite découpé spatialement par l'intermédiaire de moyens de découpage 16, en plusieurs signaux excitateurs 18 présentant des longueurs d'onde **λᵢ** correspondant aux longueurs d'onde d'excitation des fluorochromes fixés sur les éléments microscopiques à analyser.

Selon l'invention, les moyens de découpage 16 du signal de source 12 sont constitués d'un microsystème d'éléments opto-électromécaniques (décrits en détail ci-dessous, mais non représentés dans la figure 1).

Les signaux excitateurs 18 sont ensuite codés par l'intermédiaire de moyens de codage 24. Ainsi, chaque signal excitateur est modulé en temps, en fréquence et/ou en polarisation.

De préférence, la modulation des signaux excitateurs 18 est réalisée par commutation des éléments opto-électromécaniques.

Les signaux excitateurs 18 codés sont ensuite focalisés grâce à des moyens de focalisation 26 pour générer un signal de sonde 28 présentant une faible dispersion. Le signal de sonde 28 est alors propagé vers une zone de mesure 30 contenant les éléments microscopiques à analyser.

L'interaction du signal de sonde 28 avec les éléments microscopiques contenant les fluorochromes génère un signal d'interaction 32 permettant de caractériser les éléments contenus dans l'espace de mesure 30.

Le signal d'interaction 32 est alors dirigé vers des moyens d'analyse 34 qui permettent de définir les caractéristiques des éléments microscopiques analysés.

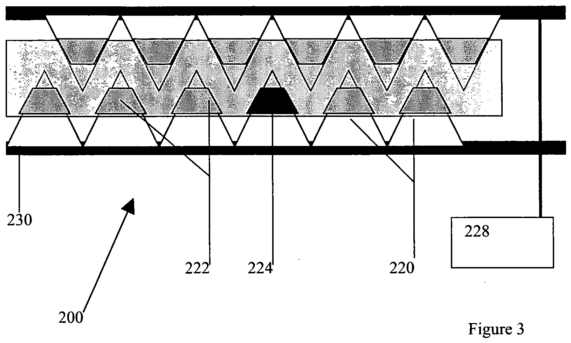

Un second exemple de réalisation de l'invention va maintenant être décrit, en référence aux figure 2 et 3.

Dans ce second exemple de réalisation, le moyen d'émission 100 est une source lumineuse 102 couplée à une première lame demi-onde 104 et à un polariseur 106.

La source lumineuse 102 émet un signal de source 120 sous la forme d'un signal laser impulsionnel produisant un rayonnement de 1064 nanomètres et des impulsions de 600 picosecondes de durée, avec une fréquence de répétition de l'ordre de 6 KHz.

La puissance moyenne de la source lumineuse 102 est égale à 45 milliwatts, ce qui correspond à une puissance crête par impulsion de l'ordre de 12,5 kilowatts.

L'association de la lame et du polariseur 106 permet d'augmenter ou de diminuer la puissance du signal de source 120 par modification de l'orientation de la lame demi-onde 104.

La polarisation du signal de source 120 est ensuite orientée linéairement par le biais d'une seconde lame demi-onde 108, puis focalisé par une lentille 110 de focale égale à deux millimètres vers un guide d'onde non linéaire, par exemple de type fibre microstructurée air-silice.

Cette architecture permet d'étendre le spectre du signal de source 120 dans la région du visible.

Avantageusement, le signal de source 120 présente une planéité de l'ordre de 3 décibels sur une bande spectrale s'étendant par exemple de 400 à 750 nanomètres.

Selon une variante de réalisation, le moyen d'émission 100 comprend une source lumineuse subnanoseconde de type microlaser qui émet un signal de source 120 sous la forme d'une lumière blanche impulsionnelle à large bande qui est cohérente ou partiellement cohérente. Cette solution, présente l'avantage d'augmenter la densité de puissance de la source tout en minimisant les coûts du dispositif.

Le signal de source 120 est ensuite dispersé spatialement par l'intermédiaire d'un moyen de dispersion 140. Ainsi, le signal de source 120 est collimaté par l'intermédiaire d'un objectif de microscope 142, puis dispersé par un prismes 144 possédant une forte transmission dans la région des longueurs d'onde visibles et de l'ultraviolet, et enfin collimaté par le biais d'une lentille cylindrique 146 présentant une focale sensiblement égale à 50 millimètres.

Le signal de source 120 dispersé est alors dirigé vers les moyens de découpage 160 propres à scinder le signal de sonde 120 en plusieurs signaux excitateurs 180 présentant des longueurs d'onde **λᵢ** correspondant aux longueurs d'onde d'excitation des fluorochromes fixés sur les éléments microscopiques à analyser.

Selon l'invention, les moyens de découpage 160 comprennent au moins un microsystème 200 d'éléments opto-électromécaniques 220.

Le microsystème 200 présente douze éléments opto-électromécaniques 220 déformables comprenant chacun un actionneur électromécanique. Les éléments opto-électromécaniques 220 présentent avantageusement un revêtement réfléchissant 222 large bande tel qu'un miroir achromatique.

Selon une variante, il est possible que le revêtement réfléchissant 222 soit réalisé par dépôt d'un miroir dichroïque de manière à restreindre la bande passante des signaux 180 réfléchis.

Le revêtement réfléchissant 222 est alternativement une membrane en or, en argent, ou en aluminium, ce qui permet de bénéficier d'une réflectivité large bande allant de l'ultraviolet à l'infrarouge. Par ailleurs ces éléments sont achromatiques, ce qui est primordial dans un tel dispositif optique.

Le microsystème 200 d'éléments opto-électromécaniques 220 scinde le signal de source 120 dispersé. Le revêtement réfléchissant 222 des éléments opto-électromécaniques 220 permet de réfléchir des signaux d'excitations 180 correspondant aux longueurs d'ondes **λᵢ** d'excitation des fluorochromes fixés sur les éléments microscopiques à analyser.

Le nombre de signaux d'excitation 180 découpés est égal au nombre d'éléments opto-électromécaniques 220 utilisés.

Dans cet exemple de réalisation, le microsystème 200 d'éléments opto-électromécaniques 220 présente une batterie de deux fois six éléments opto-électromécaniques 220. La largeur spectrale des signaux d'excitation 180 est fixée par l'étirement spectral réalisé par le prisme 144 et par la largeur des revêtements réfléchissant 222 du microsystème 200 d'éléments opto-électromécaniques 220.

Par ailleurs, le dispositif peut également comporter des filtres 224 de couleurs disposés dans le plan spectral devant les revêtements réfléchissant 222 des éléments opto-électromécaniques 220. Les filtres 224 introduisent ainsi un degré de liberté supplémentaire au niveau du flux lumineux désiré.

L'actionnement de ces éléments opto-électromécaniques 220 peut être réalisé de façon synchrone ou asynchrone. Cet actionnement est commandé par un module de commande électronique 228 multipistes.

Selon un mode de réalisation, le microsystème 200 d'éléments opto-électromécaniques 220 est de type cantilever. Ainsi, les tensions de commande à appliquer sont de l'ordre de 4 à 20 volts, et la fréquence de récurrence peut aller jusqu'à environ 10 kilohertz.

Selon un mode de réalisation alternatif, les éléments opto-électromécaniques 220 sont de type pont, c'est-à-dire qu'ils sont encrés à leurs deux extrémités. Cette géométrie permet d'augmenter la vitesse d'activation des actionneurs électromécaniques jusqu'à atteindre des fréquences de 200 kilohertz.

Enfin, selon un troisième mode de réalisation représenté sur la figure 3, les éléments opto-électromécaniques 220 sont de type cantilever et présentent une forme sensiblement triangulaire. Ces éléments opto-électromécaniques 220 sont disposés sur le long de deux barres 230 placées côtes à côtes. Ainsi les éléments opto-électromécaniques 220 de la première barre 230 sont imbriqués dans les éléments opto-électromécaniques 220 de la seconde.

La position longitudinale des barres 230 est ajustable par rapport à l'emplacement du spectre du signal de source 120 de manière à permettre la modification de la valeur de la longueur d'onde centrale **λᵢ** de chaque signal excitateur 180, par déplacement longitudinal des barres 230.

D'autre part, l'écartement transversal des deux barres 230 est également ajustable de sorte qu'il est possible de modifier la largeur spectrale de chaque signal excitateur 180, sans que la longueur d'onde centrale λᵢ soit modifiée.

Selon une variante, la forme des éléments opto-électroniques est trapézoïdale, ce qui permet d'obtenir les mêmes résultats que précédemment.

Chaque signal excitateur 180 est avantageusement modulé en fréquence. Cette modulation est gérée par le module de commande électronique 232 du microsystème 200, qui affecte une fréquence de commutation spécifique **ωᵢ** à chaque commutateur de l'élément opto-électromécanique 220 concerné. Ainsi, le signal excitateur 180 associé à cet élément opto-électromécanique 220 est codé par modulation fréquentielle.

Selon un exemple de réalisation, le laser impulsionnel 102 présente une fréquence d'impulsion **F_{L}** égale à un mégahertz. La modulation de fréquence se traduit par le prélèvement d'une impulsion de manière régulière dans le temps. La fréquence de prélèvement, égale à la fréquence de commutation **Fᵢ** est alors inférieure à la fréquence d'impulsion (**F**₁= **F_{L}**/2, **F₂**= **F_{L}**/3, F₃= **F_{L}**/5, etc.).

Ainsi, à partie d'une fréquence d'un mégahertz, le prélèvement d'une impulsion sur deux ou d'une impulsion sur trois conduit à une modulation de 500 kilohertz et de 333 kilohertz respectivement.

Les signaux excitateurs 180 sont ensuite adressés vers des moyens de codage temporel 242. Les moyens de codage temporel 242 sont ici des fibres optiques, ou lignes à retard, présentant une longueur Δ**ᵢ** prédéterminée afin de retarder temporellement chaque signal excitateur 180.

Le dispositif comporte en outre des moyens de modulation de phase 244 des signaux excitateurs 180 de sorte à changer périodiquement par étirage mécanique la longueur de chaque fibre. Selon un exemple de réalisation, ces moyens de modulation de phase sont constitués de modulateurs piézoélectriques qui, par le biais d'impulsions électriques périodiques, permettent d'étirer mécaniquement la longueur des fibres à retard. Chaque fibre étant étirée à une fréquence spécifique, les signaux excitateurs présentent une modulation de phase.

Alternativement, les moyens de modulation de phase pourront être constitués par tout autre moyen de d'étirement des fibres à retard, notamment par le biais d'éléments magnétosensibles.

On entend ici par codage temporel, le fait d'induire, pour chaque signal excitateur 180, un retard unique. Le retard unique permet d'octroyer à chaque fluorochrome une fenêtre temporelle propre lui permettant de se désexciter partiellement ou totalement. Ainsi, les fluorochromes sont sollicités successivement de manière à éviter un recouvrement temporel des signaux d'interaction 320.

Par exemple, un fluorochrome possédant un temps de fluorescence de deux nanosecondes est excité par un signal excitateur 180 de 600 picosecondes, à une longueur d'onde de 488 nanomètres. Pour pouvoir identifier le signal de fluorescence, ou signal d'interaction 320, issu de ce fluorochrome particulier, le signal d'excitation 180 suivant est retardé de plus de 2 nanosecondes par un passage dans une fibre possédant une longueur plus important que les autres. Ici le retard de 2 nanosecondes est obtenu avec une fibre d'une longueur de 0,6 mètre.

Le retard introduit entre chaque signal excitateur 180 est alors fonction du temps de fluorescence de chaque fluorochrome.

D'autre part, on entend par codage par modulation de phase, le fait d'induire, pour chaque signal excitateur 180, une variation faible et périodique du retard temporel. Cette modulation du retard temporelle est équivalente à une modulation de phase du signal et peut être détectée par le système d'analyse 340. Ainsi, cette modulation permet de différentier la fluorescence issue de deux fluorochromes que l'on aurait excités de manière synchrone.

Les signaux excitateurs peuvent également être codés par modulation de leur polarisation. L'analyse de leur polarisation permet alors d'obtenir des renseignements complémentaires à ceux obtenus par une analyse en longueurs d'onde ou en fonction du temps de déclin de la fluorescence.

Des moyens de modulation par polarisation sont par exemple décrits dans les documents suivants :
- Klaus Suhling, Paul M. W. French and David Philips : Time-resolved fluorescence microscopy, Photochem. Sci., 2005, 4, 13-22, DOI: 10.1039/b412924p.
- Gaponenko, S. V. ; Germanenko, I.N. ; Stupak, A.P. ;Eyal, M. ; Brusilovsky, D. ; Reisfeld, R ; Graham, S ; Klingshirn : C. Fluorescence of Acridine Orange in inorganic glass matrices ». Applied Physics B, vol. 58, issue 4, p.283-288 (1994).

Le second exemple de réalisation du dispositif selon l'invention comporte également des moyens de codage par modulation de polarisation 250 des signaux excitateurs 180.

Ces moyens de codage par modulation de polarisation 250 permettent de contrôler l'orientation du vecteur de polarisation de l'onde du signal excitateur 180 qui excite les fluorochromes compris dans les éléments microscopiques analysés.

Il faut donc entendre par moyens de codage par modulation de polarisation 250, des moyens qui permettent d'orienter la polarisation du signal d'excitation 180 vis-à-vis de l'échantillon à analyser.

Dans l'exemple de réalisation présenté dans la figure 2, la source lumineuse 102 est polarisée linéairement. L'orientation de la polarisation est obtenue par le biais de la seconde lame demi-onde 108. Par ailleurs, les fibres optiques utilisées sont à maintien de polarisation. Les lignes à retard présentent donc une biréfringence.

Ainsi l'orientation des signaux excitateurs 180 est maîtrisée en sortie des lignes à retard 244 par le contrôle de l'orientation de l'extrémité desdites lignes à retard 244. Chaque signal excitateur 180 présente alors une orientation particulière de son vecteur de polarisation.

Selon une variante de réalisation, les moyens de codage par modulation de polarisation 250 sont composés de lames demi-onde.

Une fois codés, les signaux excitateurs 180 sont réexpédiés en sens inverse, vers la lentille 146 et le prisme 144 qui, couplés à un miroir 262 orienté à 45 degrés, font office de moyens de focalisation 260.

En sortie des ces moyens de focalisation, le signal de sonde 280 est porteur d'informations provenant des signaux excitateurs 180 codés. Le signal de sonde 280 est alors dirigé vers l'espace de mesure 300 et, par interaction avec les éléments microscopiques à analyser contenant les fluorochromes, génère un signal d'interaction 320.

L'analyse du signal d'interaction 320 est réalisée par des moyens d'analyse 340 qui tiennent compte des paramètres évoqués ci-dessus pour caractériser les éléments microscopiques compris dans l'échantillon à analyser.

Avantageusement, les moyens d'analyse comprennent dans un premier temps des miroirs dichroïques et des polariseurs (non représentés), ce qui permet, dans un premier temps, la séparation des différentes longueurs d'onde contenues dans le signal d'interaction 320.

Un photomultiplicateur ou une diode sensible permet alors de convertir chaque signal d'interaction 320 en un signal électrique qui fournit, par l'intermédiaire d'un oscilloscope multivoix et/ou d'un analyseur de spectre électrique des renseignements sur le temps de déclin de la fluorescence issue des fluorochromes et sur l'amplitude et la fréquence d'oscillation des différents signaux d'interaction 320.

De multiples techniques d'analyse de la fluorescence, applicable dans le cadre de l'invention sont par exemple décrites dans les publications suivantes :
- Biological Imaging and Sensing ; T Furukawa, ISBN : 9783540438984 ;
- Fluorescence intensity and lifetime distribution analysis : Toward higher accuracy in fluorescence fluctuation spectroscopy ; Biophysical Journal, Aug. 2002 by Paulo, Kaupo, Brand, Leif, Eggeling, Christian, Jager, Stefan, et al. ;
- Flow cytometry Data Analysis Basic Concepts and Statistics ; Par James V. Watson, publié en 1992 ISBN 0521415454.

L'invention n'est pas limitée aux exemples de réalisation décrits et représentés ci-dessus. L'homme du métier est à même de réaliser différentes combinaisons du procédé et du dispositif susmentionné sans sortir du cadre de l'invention.

Ainsi, la caractérisation des éléments peut être indifféremment réalisée par fluorescence, phosphorescence ou bien par diffusion, diffraction, absorption. L'analyse combinée de ces différents paramètres est également possible.

Par ailleurs, les moyens de codage temporel, par modulation de phase et de polarisation pourraient également être incorporés au microsystème 200 d'éléments opto-électromécaniques 220.

## Revendications

1. Procédé de caractérisation d'éléments microscopiques (2) consistant notamment à :
- propager un signal de source (12,120) lumineux dispersé,
- découper spatialement le spectre du signal de source (12,120) en au moins deux signaux excitateurs (18,180) présentant des longueurs d'onde λᵢ prédéterminées
- coder les signaux excitateurs (18,180),
- focaliser les signaux excitateurs (18,180) pour générer un signal de sonde (28, 280) propagé vers un espace de mesure (30,300), et
- analyser un signal d'interaction (32,320) issu de l'interaction du signal de sonde (28,280) avec les éléments microscopique situés dans l'espace de mesure (30,300) ;
**caractérisé en ce que** le découpage spatial du spectre du signal de source (12,120) est réalisé par un microsystème (200) d'éléments à micro-miroirs opto-électromécaniques (220) disposés le long de deux barres (230) placées côte à côte et **en ce que** l'étape de découpe des signaux excitateurs (18,180) est précédée d'une phase de sélection de la largeur spectrale de ces signaux excitateurs (18,180), ajustable via l'écartement transversal des deux barres (230) dudit microsystème (200), sans que la longueur spectrale centrale λᵢ ne soit modifiée.

2. Procédé selon la revendication 1, **caractérisé en ce que** l'étape de codage comporte une phase de modulation temporelle des signaux excitateur (18,180).

3. Procédé selon la revendication 2, **caractérisé en ce que** la modulation temporelle des signaux excitateurs consiste à retarder au moins un signal excitateur (18,180) d'une valeur prédéterminée.

4. Procédé selon l'une quelconque des revendications 2 et 3, **caractérisé en ce que** la modulation temporelle comporte une phase de modulation de phase d'au moins un signal excitateur (18,180).

5. Procédé selon l'une quelconque des revendications précédentes, **caractérisé en ce que** l'étape de codage comporte une phase de modulation fréquentielle des signaux excitateurs (18,180).

6. Procédé selon la revendication 5, **caractérisé en ce que** la modulation fréquentielle est réalisée par commutation des éléments opto-électromécaniques (220) du microsystème (200).

7. Procédé selon l'une quelconque des revendications précédentes, **caractérisé en ce que** l'étape de codage présente une phase de modulation de la polarisation des signaux excitateur (18,180).

8. Dispositif de caractérisation d'éléments microscopiques permettant la mise en oeuvre du procédé défini ci-dessus, le dispositif comportant :
- un moyen d'émission (10,100) d'un signal de source (12,120) lumineux dispersé ;
- un découpeur (16,160) de spectre propre à scinder le spectre du signal de source (12,120) en au moins deux signaux excitateurs (18,180) de longueurs d'onde λᵢ prédéterminées ;
- des moyens de codage (24,240) des signaux excitateurs ;
- un espace de mesure (30,300) dans lequel est propagé un signal de sonde (28,280), regroupant les signaux excitateurs (18,180) ; et
- des moyens d'analyse (34,340) d'un signal d'interaction (32,320) issu de l'interaction du signal de sonde (12) avec les éléments microscopiques situés dans l'espace de mesure (30,300) ;
**caractérisé en ce que** le découpeur (16,160) de spectre est un microsystème (200) d'éléments à micro-miroirs opto-électromécaniques (220) disposés le long de deux barres (230) placées côte à côte et comportant des moyens de sélection (228) de la largeur spectrale des signaux excitateurs (18,180), ajustable via l'écartement transversal des deux barres (230), sans que la longueur spectrale centrale λᵢ ne soit modifiée.

9. Dispositif selon la revendication 8, **caractérisé en ce que** les éléments opto-électromécaniques (220) sont de forme sensiblement triangulaire.

10. Dispositif selon l'une quelconque des revendications 8 à 9, **caractérisé en ce que** les éléments opto-électromécaniques (220) sont des miroirs achromatiques déformables.

11. Dispositif selon l'une quelconque des revendications 8 à 10, **caractérisé en ce qu'**il comporte des moyens de codage par modulation temporelle (242) des signaux excitateurs (18,180).

12. Dispositif selon la revendication 11, **caractérisé en ce qu'**il présente des moyens de modulation de phase (244) d'au moins un signal excitateur (18,180).

13. Dispositif selon l'une quelconque des revendications 8 à 12, **caractérisé en ce qu'**il comporte des moyens de codage par modulation fréquentielle (200) des signaux excitateurs (18,180).

14. Dispositif selon l'une quelconque des revendications 8 à 13, **caractérisé en ce qu'**il comporte des moyens de codage par modulation de la polarisation (250) des signaux excitateurs (18,180).

15. Dispositif selon l'une quelconque des revendications 8 à 14, **caractérisé en ce que** la source lumineuse est une source de lumière blanche impulsionnelle.

## Patentansprüche

1. Verfahren zum Charakterisieren mikroskopischer Elemente (2), das insbesondere aus Folgendem besteht:
- Verbreiten eines gestreuten Quellenlichtsignals (12, 120),
- räumliches Teilen des Spektrums des Quellensignals (12, 120) in mindestens zwei Erregersignale (18, 180), die vorbestimmte Wellenlängen λᵢ aufweisen,
- Codieren der Erregersignale (18, 180),
- Fokussieren der Erregersignale (18, 180), um ein Sondensignal (28, 280) zu erzeugen, das zu einem Messraum (30, 300) verbreitet wird, und
- Analysieren eines Wechselwirkungssignals (32, 320), das aus der Wechselwirkung des Sondensignals (28, 280) mit den mikroskopischen Elementen, die sich in dem Messraum (30, 300) befinden, hervorgeht;
**dadurch gekennzeichnet, dass** das räumliche Teilen des Quellensignals (12, 120) durch ein Mikrosystem (200) von Elementen mit opto-elektromechanischen Mikrospiegeln (220) ausgeführt wird, die entlang von zwei Stangen (230), die nebeneinander platziert sind, angeordnet sind, und dadurch, dass dem Schritt des Teilens der Erregersignale (18, 180) eine Auswahlphase der spektralen Breite dieser Erregersignale (18, 180) vorangeht, die anhand des Querbeabstandens der zwei Stangen (230) des Mikrosystems (200) einstellbar ist, ohne dass die zentrale spektrale Länge λᵢ geändert wird.

2. Verfahren nach Anspruch 1, **dadurch gekennzeichnet, dass** der Codierschritt eine Phase der zeitlichen Modulation der Erregersignale (18, 180) umfasst.

3. Verfahren nach Anspruch 2, **dadurch gekennzeichnet, dass** die zeitliche Modulation der Erregersignale darin besteht, mindestens ein Erregersignal (18, 180) um einen vorbestimmten Wert zu verzögern.

4. Verfahren nach einem der Ansprüche 2 und 3, **dadurch gekennzeichnet, dass** die zeitliche Modulation eine Phasenmodulationsphase mindestens eines Erregersignals (18, 180) umfasst.

5. Verfahren nach einem der vorhergehenden Ansprüche, **dadurch gekennzeichnet, dass** der Codierschritt eine Frequenzphasenmodulation der Erregersignale (18, 180) umfasst).

6. Verfahren nach Anspruch 5, **dadurch gekennzeichnet, dass** die Frequenzmodulation durch Umschalten der opto-elektromechanischen Elemente (220) des Mikrosystems (200) ausgeführt wird.

7. Verfahren nach einem der vorhergehenden Ansprüche, **dadurch gekennzeichnet, dass** der Codierschritt eine Polungsmodulationsphase der Erregersignale (18, 180) umfasst.

8. Vorrichtung zu Charakterisierung mikroskopischer Elemente, die das Umsetzen des oben definierten Verfahrens erlaubt, wobei die Vorrichtung Folgendes umfasst:
- ein Mittel (10, 100) zum Senden eines gestreuten Quellenlichtsignals (12, 120);
- einen Spektrumteiler (16, 160), der geeignet ist, das Spektrum des Quellensignals (12, 120) in mindestens zwei Erregersignale (18, 180) mit vorbestimmten Wellenlängen λᵢ zu teilen;
- Mittel (24, 240) zum Codieren der Erregersignale;
- einen Messraum (30, 300), in dem ein Sondensignal (28, 280) verbreitet wird, das die Erregersignale (18, 180) gruppiert; und
- Mittel (34, 340) zum Analysieren eines Wechselwirkungssignals (32, 320), das aus der Wechselwirkung des Sondensignals (12) mit den mikroskopischen Elementen, die sich in dem Messraum (30, 300) befinden, hervorgeht;
**dadurch gekennzeichnet, dass** der Spektrumteiler (16, 160) ein Mikrosystem (200) aus Elementen mit opto-elektromechanischen Mikrospiegeln (220) ist, die entlang von zwei Stangen (230), die nebeneinander platziert sind, angeordnet sind und Mittel (228) zum Auswählen der spektralen Breite der Erregersignale (18, 180) umfassen, die anhand des Querbeabstandens der zwei Stangen (230) einstellbar ist, ohne dass die spektrale Länge λᵢ geändert wird.

9. Vorrichtung nach Anspruch 8, **dadurch gekennzeichnet, dass** die opto-elektromechanischen Elemente (220) im Wesentlichen eine dreieckige Form haben.

10. Vorrichtung nach einem der Ansprüche 8 bis 9, **dadurch gekennzeichnet, dass** die opto-elektromechanischen Elemente (220) verformbare achromatische Spiegel sind.

11. Vorrichtung nach einem der Ansprüche 8 bis 10, **dadurch gekennzeichnet, dass** sie Mittel zum Codieren durch zeitliche Modulation (242) von Erregersignalen (18, 180) umfasst.

12. Vorrichtung nach Anspruch 11, **dadurch gekennzeichnet, dass** sie Mittel (244) zur Phasenmodulation mindestens eines Erregersignals (18, 180) umfasst.

13. Vorrichtung nach einem der Ansprüche 8 bis 12, **dadurch gekennzeichnet, dass** sie Mittel zum Codieren durch Frequenzmodulation (200) der Erregersignale (18, 180) umfasst.

14. Vorrichtung nach einem der Ansprüche 8 bis 13, **dadurch gekennzeichnet, dass** sie Mittel zum Codieren der Polarisation (250) der Erregersignale (18, 180) umfasst.

15. Vorrichtung nach einem der Ansprüche 8 bis 14, **dadurch gekennzeichnet, dass** die Lichtquelle eine Impuls-Weißlichtquelle ist.

## Claims

1. Method of characterizing microscopic elements (2), consisting in particular of:
- propagating a dispersed light source signal (12, 120),
- spatially chopping the spectrum of the source signal (12, 120) into at least two excitation signals (18, 180) having predetermined wavelengths λᵢ,
- coding the excitation signals (18, 180),
- focusing the excitation signals (18, 180) in order to generate a sensor signal (28, 280) propagated towards a measuring space (30, 300), and
- analyzing an interaction signal (32, 320) issuing from the interaction of the sensor signal (28, 280) with the microscopic elements situated in the measuring space (30, 300);
**characterized in that** the spatial chopping of the spectrum of the source signal (12, 120) is carried out by a microsystem (200) of elements with opto-electromechanical micromirrors (220) disposed along two bars (230) placed side by side and **in that** the step of chopping the excitation signals (18, 180) is preceded by a phase of selecting the spectral width of these excitation signals (18, 180), adjustable via the transverse separation of the two bars (230) of said microsystem (200), without the centre wavelength λᵢ being modified.

2. Method according to claim 1, **characterized in that** the coding step comprises a phase of temporal modulation of the excitation signals (18, 180).

3. Method according to claim 2, **characterized in that** the temporal modulation of the excitation signals consists of delaying at least one excitation signal (18, 180) by a predetermined value.

4. Method according to either one of claims 2 and 3, **characterized in that** the temporal modulation comprises a phase of phase modulation of at least one excitation signal (18, 180).

5. Method according to any one of the preceding claims, **characterized in that** the coding step comprises a phase of frequency modulation of the excitation signals (18, 180).

6. Method according to claim 5, **characterized in that** the frequency modulation is carried out by switching of the opto-electromechanical elements (220) of the microsystem (200).

7. Method according to any one of the preceding claims, **characterized in that** the coding step has a phase of modulation of the polarization of the excitation signals (18, 180).

8. Device for characterizing microscopic elements enabling the method defined above to be implemented, the device comprising:
- a means (10, 100) of emitting a dispersed light-source signal (12, 120);
- a spectrum chopper (16, 160) able to divide the spectrum of the source signal (12, 120) into at least two excitation signals (18, 180) with predetermined wavelengths λᵢ;
- means (24, 240) of coding the excitation signals;
- a measuring space (30, 300) in which a sensor signal (28, 280) is propagated, grouping together the excitation signals (18, 180); and
- means (34, 340) of analyzing an interaction signal (32, 320) issuing from the interaction of the sensor signal (12) with the microscopic elements situated in the measuring space (30, 300);
**characterized in that** the spectrum chopper (16, 160) is a microsystem (200) of elements with opto-electromechanical micromirrors (220) disposed along two bars (230) placed side by side and comprising means (228) of selecting the spectral width of the excitation signals (18, 180) adjustable via the transverse separation of the two bars (230) of said microsystem (200), without the centre wavelength λᵢ being modified.

9. Device according to claim 8, **characterized in that** the opto-electromechanical elements (220) are substantially triangular in shape.

10. Device according to any one of claims 8 to 9, **characterized in that** the opto-electromechanical elements (220) are deformable achromatic mirrors.

11. Device according to any one of claims 8 to 10, **characterized in that** it comprises means of coding by temporal modulation (242) of the excitation signals (18, 180).

12. Device according to claim 11, **characterized in that** it has means (244) of phase modulation of at least one excitation signal (18, 180).

13. Device according to any one of claims 8 to 12, **characterized in that** it comprises means of coding by frequency modulation (200) of the excitation signals (18, 180).

14. Device according to any one of claims 8 to 13, **characterized in that** it comprises means of coding by modulation of the polarization (250) of the excitation signals (18, 180).

15. Device according to any one of claims 8 to 14, **characterized in that** the light source is a pulsed white light source.
